# EUROPÄISCHE PATENTSCHRIFT

(11) **EP 3 795 419 B1**
(45) Veröffentlichungstag und Bekanntmachung des Hinweises auf die Patenterteilung: **04.10.2023**
(21) Anmeldenummer: 20196262.8
(22) Anmeldetag: 15.09.2020
(51) Int. Cl.: B60P 3/34, B62D 53/00

(54) **ROUTENZUGANHÄNGER UND ROUTENZUG**
ROUTE TRAIN TRAILER AND ROUTE TRAIN
REMORQUE DE CHARIOT TRACTEUR ET CHARIOT TRACTEUR

(30) Priorität: 18.09.2019 DE 202019105174 U
(43) Veröffentlichungstag der Anmeldung: 24.03.2021
(73) Patentinhaber: H + E Produktentwicklung GmbH, 01468 Moritzburg (DE)
(72) Erfinder: Bobe, Mirko, 01109 Dresden (DE); Göldner, Johannes, 01217 Dresden (DE); Grütze, Matthias, 01689 Niederau/OT Gröbern (DE)
(74) Vertreter: Werner, André

(56) Entgegenhaltungen:
- WO-A1-2020/239375
- DE-A1-102011 080 857
- DE-U1-202018 103 943
- US-A1- 2015 225 007

## Beschreibung

Die Erfindung betrifft einen mit Rollenbahnen ausgerüsteten Routenzuganhänger sowie einen Routenzug mit einem oder mehreren dieser Routenzuganhänger.

Routenzüge, auch Schleppzüge genannt, finden insbesondere im innerbetrieblichen Warentransport Anwendung; sie werden unter anderem zur Bestückung von Fließbändern, in Warenlagern, in Logistikzentren von Paket- oder Postdienstleistern oder in Gepäckabfertigungsbereichen von Flug- oder Bahnhöfen eingesetzt. Sie umfassen üblicherweise ein Schleppfahrzeug und ein, meist aber mehrere Routenzuganhängern, die über Kupplungen mit dem Schleppfahrzeug und den ggf. weiteren Routenzuganhängern verbunden sind.

Das Verladen der Ladungsträger von den Routenzuganhängern bzw. auf diese erfolgt im Regelfall an spezifisch eingerichteten Übergabestationen. Eine etablierte Verladetechnik - insbesondere in hochautomatisierten Produktionsstätten oder in Logistikzentren - ist der Ladungsträgertransfer mittels Rollenbahnen. Sowohl auf dem Routenzuganhänger als auch an der Übergabestation sind hierzu beiderseits gleichhohe Rollenbahnen installiert. Die Rollen werden mittels eines Antriebs in Bewegung versetzt, wodurch der Ladungsträger von der Rollenbahn des Routenzuganhängers auf die Rollenbahn der Übergabestation gleitet (oder umgekehrt). Die Rollenbahnen sind üblicherweise quer zur Fahrzeuglängsachse des Routenzuganhängers ausgerichtet. Der Routenzuganhänger wird zum Ladungsträgertransfer neben der Übergabestation platziert und der Ladungsträger wird über die an die Übergabestation angrenzende Fahrzeugseite mittels der Rollenbahnen übergeben. Routenzuganhänger mit solchen Rollenbahnen sind unter anderem in DE 10 2013 119 213 A1 beschrieben.

Einen Routenzuganhänger bzw. Dolly zum Transport von Cargo-Containern offenbart ferner auch DE 20 2018 103 943 U1. Dieser Routenzuganhänger verfügt ebenfalls über jeweils eine Rollenbahn, die mittels eines Lade-Motors mit wahlweisem Drehsinn angetrieben werden kann.

Bekannt sind Routenzuganhänger mit zwei quer zur Fahrzeugachse ausgerichteten, angetriebenen Rollenbahnen, wobei die erste der Rollenbahnen nur in einer Drehrichtung und die zweite Rollenbahn nur in der gegensinnigen Drehrichtung betreibbar sind. Dadurch kann an einer Übergabestation gleichzeitig ein Ladungsträger aufgenommen und ein zweiter abgegeben werden. Jedoch ist der Ladungsträger hierdurch nur auf einer der jeweiligen Rollenbahnen platzierbar, wodurch die Größe der Ladungsträger auf die jeweilige Rollenbahnbreite beschränkt ist. Zudem können an einer spezifischen Rollenbahn die Ladungsträger nur über eine Fahrzeugseite aufgenommen und nur über die jeweils andere Fahrzeugseite abgegeben werden. Dies erfordert, dass der Routenzug die Übergabestation zur Übergabe eines Ladungsträgers in einer vorbestimmten Richtung anfahren muss und störende Wendemanöver nicht immer vermieden werden können.

Es ist daher Aufgabe der Erfindung, diese Nachteile zu überwinden und einen Routenzuganhänger mit insbesondere mehreren Rollenbahnen bereitzustellen, mittels dessen auch Ladungsträger transportiert werden können, deren Größe die Rollenbahnbreite überschreiten. Zudem soll die Abgabe oder Aufnahme der Ladungsträger von jeder bzw. auf jede der Rollenbahnen flexibel über jede der Fahrzeugseiten des Routenzuganhängers ermöglicht sein.

Diese Aufgabe wird durch einen Routenzuganhänger für Routenzüge mit den kennzeichnenden Merkmalen nach dem Anspruch 1 sowie durch die darauf basierenden Routenzüge nach den Ansprüchen 14 und 15 gelöst; zweckmäßige Weiterbildungen der Erfindung sind in den Ansprüchen 2 bis 13 aufgeführt.

Nach Maßgabe der Erfindung umfasst der Routenzuganhänger eine oder mehrere angetriebene, quer zur Fahrzeuglängsachse ausgerichtete Rollenbahnen mittels derer ein Ladungsträger wahlweise über eine der beiden Fahrzeugseiten des Routenzuganhängers an eine Übergabestation abgebbar oder von dieser aufnehmbar ist. Vorzugsweise besitzt der Routenzuganhänger zwei Rollenbahnen.

Der Routenzuganhänger verfügt über eine oder mehrere Datenlichtschranken, die den drahtlosen Datenaustausch mit der Übergabestation ermöglichen. Die Datenlichtschranken befinden sich vorzugsweise an den Fahrzeugseiten des Routenzuganhängers. An der Übergabestation sind zum Datenaustausch korrespondierende Datenlichtschranken angebracht. Die ausgetauschten Daten können zum Beispiel die Größe des Ladungsträgers, Kenn- bzw. Identifizierungsnummern der transportierten Ware aber auch Informationen zum Transfer selbst, wie Abgeben/Aufnehmen oder Start- und Stopp des Transfers, betreffen. Die Informationen zur Größe des Ladungsträgers oder zur Art der zu transportierenden Ware können auch bereits vor Anfahrt zur Übergabestation an den Routenzuganhänger übermittelt worden sein.

Des Weiteren besitzt der Routenzuganhänger einen oder mehrere, vorzugsweise vier, Positionsdistanzsensoren, die zur Detektion der Position des Ladungsträgers auf der oder den Rollenbahnen dienen. Die Positionsdistanzsensoren sind beispielsweise an der Fahrzeugfront- und an der Fahrzeugheckseite des Routenzuganhängers symmetrisch verteilt angebracht.

Schließlich weist der Routenzuganhänger eine Steuerungs- und Regelungsvorrichtung auf, die dazu eingerichtet ist, die Rollendrehrichtung und/oder die Rollendrehgeschwindigkeit jeder der Rollenbahnen individuell in Abhängigkeit der Position des Ladungsträgers auf der oder den Rollenbahnen zu steuern.

Wird beispielsweise mittels der Positionsdistanzsensoren detektiert, dass der Ladungsträger auf zwei Rollenbahnen platziert ist, werden beide Rollenbahnen zum Transfer des Ladungsträgers aktiviert. Befindet sich der Ladungsträger dagegen nur auf einer der Rollenbahnen oder mehrere Ladungsträger auf jeweils separaten Rollenbahnen werden nur die jeweiligen Rollenbahnen angetrieben.

Der vorgeschlagene Routenzuganhänger gewährleistet somit eine flexible Handhabung von Ladungsträgern, deren Größen die Rollenbahnbreite überschreiten.

Zudem ermöglichen die Positionsdistanzsensoren eine Rückmeldung, ob die Ladungsträger auf dem Routenzuganhänger korrekt platziert sind. Dies ist insbesondere dann von Vorteil, wenn die Routenzuganhänger unter Verwendung von Staplern beladen werden. Mittels eines Signalgebers oder einer Anzeige können dem Bedienpersonal Informationen zur korrekten Positionierung der Ladungsträger übermittelt werden. Auch die Gefahr von Beschädigungen durch Staplergabeln wird hierdurch reduziert.

Da die Rollendrehrichtung durch Ansteuerung mittels der Steuerungs- und Regelungsvorrichtung für jede der Rollenbahnen vorgebbar ist, können Ladungsträger an jeder Fahrzeugseite, d. h. in Fahrtrichtung links und rechts, sowohl aufgenommen als auch abgegeben werden. Die Einschränkungen beim Anfahren an Übergabestationen, die bei Nutzung der Stand-der-Technik-Routenzuganhänger mit festgelegter Abgabe- und Aufnahmeseite auftreten, entfallen somit.

Der Datenaustausch über die Datenlichtschranken zwischen den Routenzuganhängern und der Übergabestation ermöglicht es zudem, die Ladungsträgerübergabe automatisiert - ohne den Eingriff durch Bedienpersonal - durchzuführen.

Das Fahrgestell einschließlich der Lenkung und der Kupplungen, die Rollenbahnen und deren Antrieb entsprechen bei dem erfindungsgemäßen Routenzuganhänger dem herkömmlichen Aufbau bekannter Routenzuganhänger.

Der Routenzuganhänger kann eine oder mehrere Einweglichtschranken besitzen, die zur Detektion des Beginns und des Endes des Ladungsträgertransfers zu oder von der Übergabestation dienen. Diese sind vorzugsweise an den Fahrzeugseiten des Routenzuganhängers angebracht, wobei die Lichtlaufstrecke zwischen dem Einweglichtschrankensender und dem Einweglichtschrankenempfänger jeweils oberhalb der Rollenbahnen parallel zur Fahrzeuglängsachse verläuft. Die Überwachung der Übergabephase mittels der Einweglichtschranken ist ein Beitrag zur Gewährleistung der Funktionalität bei vollautomatischer Übergabe von Ladungsträgern. Auch können - aus Sicherheitsgründen - Anhängerräder während der Ladungsträgerübergabe blockiert werden. Darüber hinaus kann die Größe des Ladungsträgers (quer zur Fahrzeuglängsachse) ermittelt und der Ladungsträger so mittig auf der Rollenbahn platziert werden.

Zur Erhöhung der Sicherheit gegen Herabfallen der Ladungsträger während der Fahrt sowie als Sicherungsanschlag beim Aufnehmen des Ladungsträgers können an jedem Rollenbahnanfang und an jedem Rollenbahnende jeder der Rollenbahnen ein mittels der Steuerungs- und Regelungsvorrichtung anheb- oder versenkbares Ladungssicherungselement, zum Beispiel in Form eines Schotts, installiert sein.

Gemäß einer Ausgestaltung weist der Routenzuganhänger eine oder mehrere Reflexionslichtschranken zur Detektion der Position in Fahrtrichtung relativ zur Übergabestation auf. An der Übergabestation können hierzu Reflektoren montiert und so justiert sein, dass diese mit den Reflexionslichtschranken interagieren. Vorzugsweise sind an jeder Fahrzeugseite des Routenzuganhängers zwei Reflexionslichtschranken angebracht.

Ferner kann vorgesehen sein, dass der Routenzuganhänger eine oder mehrere Lagedistanzsensoren zur Bestimmung des Abstands und des Winkels zur Übergabestation besitzt, die insbesondere an den Fahrzeugseiten des Routenzuganhängers angeordnet sind. Vorzugsweise ist an jeder Fahrzeugseite des Routenzuganhängers an jeder der Rollenbahnen im Bereich der beiden Positionen der Rollenlager jeweils einer der Lagedistanzsensoren angebracht, d. h., an jeder Rollenbahn sind auf der linken Fahrzeugseite zwei Lagedistanzsensoren und auf der rechten Fahrzeugseite ebenfalls zwei Lagedistanzsensoren installiert.

Die Reflexionslichtschranken und die Lagedistanzsensoren unterstützen die Ausrichtung des Routenzuganhängers beim Anfahren an die Übergabestation; vorteilhaft sind diese Ausführungen insbesondere für Systeme mit vollautomatischer Ladungsträgerübergabe. Im Unterschied zu den aus dem Stand der Technik bekannten Systemen erfolgt die Detektion der Anhängerposition am Routenzuganhänger selbst, wodurch letztlich eine bessere Positionierung desselben realisierbar ist.

Der erfindungsgemäße Routenzug weist mindestens einen der vorgeschlagenen Routenzuganhänger sowie ein Schleppfahrzeug auf, wobei das Schleppfahrzeug über eine Datenverbindung mit der Steuerungs- und Regelungsvorrichtung des Routenzuganhängers bzw. den Steuerungs- und Regelungsvorrichtungen der Routenzuganhänger gekoppelt ist. Die Steuerungs- und Regelungsvorrichtungen der Routenzuganhänger können insbesondere dazu eingerichtet sein, den Antrieb des Schleppfahrzeugs zu blockieren, um ein unbeabsichtigtes Anfahren während der Ladungsträgerübergabe zu verhindern.

Das Schleppfahrzeug des Routenzugs kann sowohl eine fahrergesteuertes als auch ein autonom fahrendes Schleppfahrzeug sein. Ein Vorteil gegenüber den bekannten fahrerlosen Transportsystemen (FTS) ist, dass zur vollautomatischen Ladungsträgerübergabe keine bodenseitige Spurführungsinstallation erforderlich ist.

Gemäß einer Ausgestaltung umfasst der Routenzug einen oder mehrere der erfindungsgemäßen Routenzuganhänger mit den oben beschriebenen Reflexionslichtschranken und/oder Lagedistanzsensoren sowie ein fahrergesteuertes Schleppfahrzeug. Zu Unterstützung des Fahrers ist im Schleppfahrzeug ein Bildschirm zur Anzeige des Abstandes und des Winkels der Routenzuganhänger zur Übergabestation installiert. Mittels der Bildschirm-Anzeige kann der Fahrer seine Anfahrt optimieren bzw. entsprechende Fahrtkorrekturen vornehmen. Zusätzlich kann ein Laserprojektor am Routenzug installiert sein, mittels dessen Markierungen auf den Boden projiziert werden können, die dem Fahrer die Ausrichtung des Routenzugs erleichtern.

Das Schleppfahrzeug kann schließlich eine Bedienungseinrichtung aufweisen, die es dem Fahrer ermöglicht, eine der Rollenbahnen am Routenzuganhänger sowie die gewünschte Übergabeseite vorzuwählen.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind. Dazu zeigen:
Fig. 1: den Routenzuganhänger in der Perspektivansicht,
Fig. 2: den Routenzuganhänger in der Draufsicht,
Fig. 3: den Routenzug an einer Übergabestation in der Draufsicht, und
Fig. 4: den Routenzug an einer Übergabestation in der Schnittansicht.

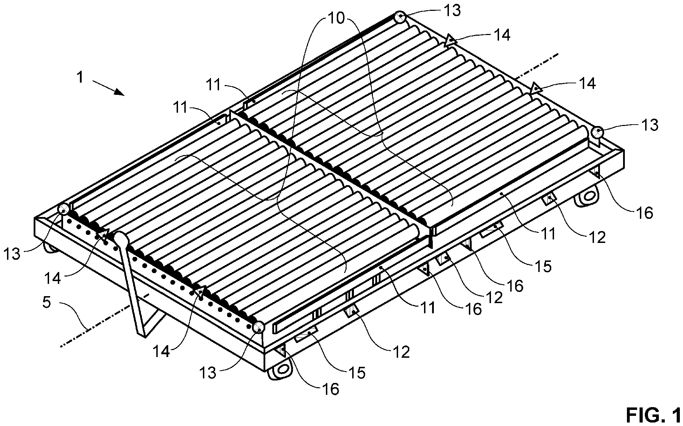

Der Routenzuganhänger 1 gemäß der Fig. 1 besitzt zwei parallel nebeneinander angeordnete, quer zur Fahrzeuglängsachse 5 ausgerichtete, elektromotorisch angetriebene Rollenbahnen 10. An den beiden Rollenbahnen 10 ist jeweils am Rollenbahnanfang und am Rollenbahnende das als Schott ausgebildete Ladungssicherungselement 11 installiert. Die Ladungssicherungselemente 11 sind individuell durch Ansteuerung über die (nicht dargestellte) Steuerungs- und Regelungsvorrichtung anhebbar bzw. versenkbar.

An beiden Fahrzeugseiten befinden sich die Einweglichtschranken 13. An jeder Fahrzeugseite besteht die Einweglichtschranke 13 aus dem front- oder heckseitig installierten Einweglichtschrankensender und dem entsprechend gegenüberliegenden, heck- oder frontseitig angebrachten Einweglichtschrankenempfänger.

Von den vier Positionsdistanzsensoren 14 sind jeweils zwei an der Frontseite und zwei an der Heckseite angebracht.

An der linken Fahrzeugseite wird schematisch die Position der drei Datenlichtschranken 12, der zwei Reflexionslichtschranken 15 sowie der vier Lagedistanzsensoren 16 gezeigt; die nicht dargestellte Installation dieser Sensoren an der rechten Fahrzeugseite entspricht der der linken Fahrzeugseite.

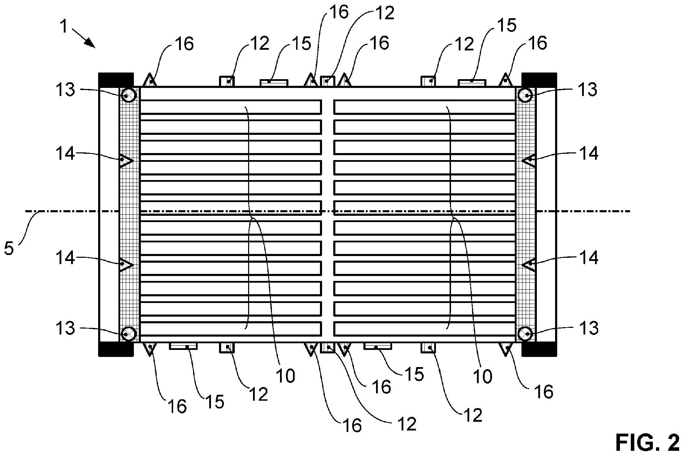

Die Draufsichtdarstellung gemäß der Fig. 2 entspricht dem Routenzuganhänger 1 nach der Fig. 1, wobei in Fig. 2 sowohl auf der rechten als auch der linken Fahrzeugseite die Sensorik vollständig schematisch wiedergegeben ist.

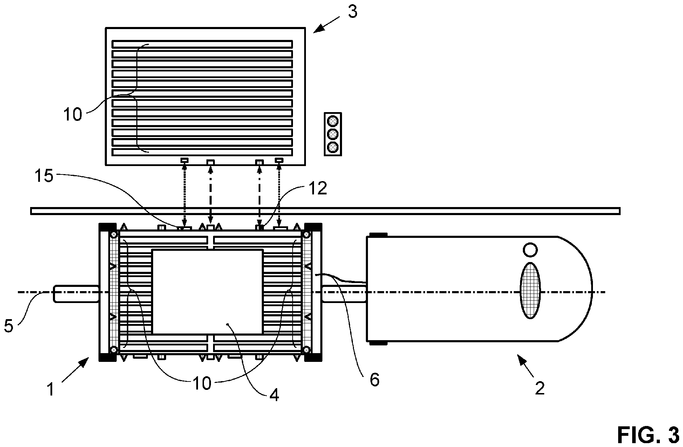

Einen Routenzug mit dem Schleppfahrzeug 2 und dem Routenzuganhänger 1 (entsprechend der Ausführung nach Fig. 1 und Fig. 2) im Bereich der Übergabestation 3 zeigt die Fig. 3. Das Schleppfahrzeug 2 und der Routenzuganhänger 1 sind über die Datenleitung 6 verbunden, die den Austausch von Daten, insbesondere der Sensordaten, ermöglicht. Die Übergabestation 3 besitzt eine nach Art und Weise ähnliche Rollenbahn 10, wie die des Routenzuganhängers 1. Der Ladungsträger 4 befindet sich auf beiden Rollenbahnen 10 des Routenzuganhängers 1.

Beispielhaft ist die Interaktion zwischen der Datenlichtschranken 12 und einem nicht bezeichneten Pendant an der Übergabestation 3 durch die Doppelpfeile dargestellt. Gegenüberliegend zur Reflexionslichtschranke 15 an der Übergabestation 3 befindet sich ein ebenfalls nicht bezeichneter Reflektor; erfasst die Reflexionslichtschranke 15 beim Anfahren an die Übergabestation 3 die Reflexion (Doppelpfeil) vom Reflektor, so wird ein Signal an die Steuerungs- und Regelungsvorrichtung ausgeben, dass die vorbestimmte Position in Fahrtrichtung relativ zur Übergabestation 3 erreicht ist.

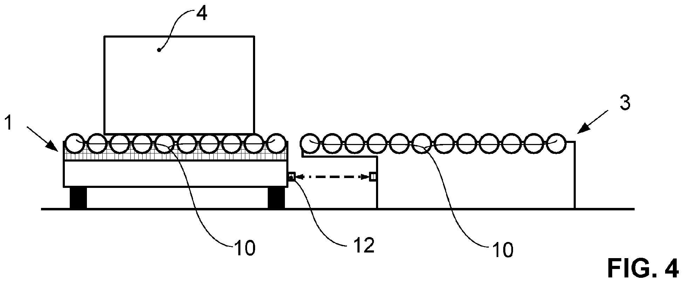

Die mit Fig. 3 korrespondierende Ansicht nach Fig. 4 veranschaulicht die Höhenlage der Rollenbahnen 10 des Routenzuganhänger 1 sowie der Übergabestation 3.

### Liste der verwendeten Bezugszeichen

- 1: Routenzuganhänger
- 2: Schleppfahrzeug
- 3: Übergabestation
- 4: Ladungsträger
- 5: Fahrzeuglängsachse
- 6: Datenverbindung
- 10: Rollenbahn
- 11: Ladungssicherungselement
- 12: Datenlichtschranken
- 13: Einweglichtschranken
- 14: Positionsdistanzsensoren
- 15: Reflexionslichtschranken
- 16: Lagedistanzsensoren

## Patentansprüche

1. Routenzuganhänger (1), umfassend eine oder mehrere angetriebene, quer zur Fahrzeuglängsachse (5) ausgerichtete Rollenbahnen (10) mittels derer ein Ladungsträger (4) wahlweise über eine der beiden Fahrzeugseiten des Routenzuganhängers (1) an eine Übergabestation (3) abgebbar oder von dieser aufnehmbar ist, sowie eine Steuerungs- und Regelungsvorrichtung, **dadurch gekennzeichnet, dass** der Routenzuganhänger (1)
- eine oder mehrere Datenlichtschranken (12) zum drahtlosen Datenaustausch mit der Übergabestation (3), und
- einen oder mehrere Positionsdistanzsensoren (14) zur Detektion der Position des Ladungsträgers (4) auf der oder den Rollenbahnen (10) aufweist,
- wobei die Steuerungs- und Regelungsvorrichtung dazu eingerichtet ist, die Rollendrehrichtung und/oder die Rollendrehgeschwindigkeit jeder der Rollenbahnen (10) individuell in Abhängigkeit der Position des Ladungsträgers (4) auf der oder den Rollenbahnen (10) zu steuern.

2. Routenzuganhänger (1) nach Anspruch 1, **dadurch gekennzeichnet, dass** die Positionsdistanzsensoren (14) an der Fahrzeugfront- und an der Fahrzeugheckseite des Routenzuganhängers (1) symmetrisch verteilt angebracht sind.

3. Routenzuganhänger (1) nach Anspruch 1 oder 2, **dadurch gekennzeichnet, dass** vier Positionsdistanzsensoren (14) am Routenzuganhänger (1) angebracht sind.

4. Routenzuganhänger (1) nach einem der Ansprüche 1 bis 3, **dadurch gekennzeichnet, dass** die Datenlichtschranken (12) an den Fahrzeugseiten des Routenzuganhängers (1) angebracht sind.

5. Routenzuganhänger (1) nach Anspruch 4, **dadurch gekennzeichnet, dass** an jeder Fahrzeugseite drei Datenlichtschranken (12) am Routenzuganhänger angebracht sind.

6. Routenzuganhänger (1) nach einem der Ansprüche 1 bis 5, **dadurch gekennzeichnet, dass** dieser eine oder mehrere Einweglichtschranken (13) zur Detektion des Beginns und des Endes des Ladungsträgertransfers zu oder von der Übergabestation aufweist.

7. Routenzuganhänger (1) nach Anspruch 6, **dadurch gekennzeichnet, dass** die Einweglichtschranken (13) an den Fahrzeugseiten des Routenzuganhängers (1) angebracht sind, wobei die Lichtlaufstrecke zwischen dem Einweglichtschrankensender und dem Einweglichtschrankenempfänger jeweils oberhalb der Rollenbahnen (10) parallel zur Fahrzeuglängsachse (5) verläuft.

8. Routenzuganhänger (1) nach einem der Ansprüche 1 bis 7, **dadurch gekennzeichnet, dass** an jedem Rollenbahnanfang und an jedem Rollenbahnende jeder der Rollenbahnen (10) ein mittels der Steuerungs- und Regelungsvorrichtung anheb- oder versenkbares Ladungssicherungselement (11) installiert ist.

9. Routenzuganhänger (1) nach einem der Ansprüche 1 bis 8, dass dieser eine oder mehrere Reflexionslichtschranken (15) zur Detektion der Position in Fahrtrichtung relativ zur Übergabestation (3) aufweist.

10. Routenzuganhänger (1) nach Anspruch 9, **dadurch gekennzeichnet, dass** die Reflexionslichtschranken (15) an den Fahrzeugseiten des Routenzuganhängers (1) angebracht sind.

11. Routenzuganhänger (1) nach einem der Ansprüche 1 bis 10, **dadurch gekennzeichnet, dass** dieser einen oder mehrere Lagedistanzsensoren (16) zur Bestimmung des Abstands und des Winkels zur Übergabestation (3) aufweist.

12. Routenzuganhänger (1) nach Anspruch 11, **dadurch gekennzeichnet, dass** die Lagedistanzsensoren (16) an den Fahrzeugseiten des Routenzuganhängers (1) angeordnet sind.

13. Routenzuganhänger (1) nach Anspruch 12, **dadurch gekennzeichnet, dass** an jeder Fahrzeugseite des Routenzuganhängers (1) an jeder der Rollenbahnen (10) jeweils im Bereich der beiden Positionen der Rollenlager jeweils einer der Lagedistanzsensoren (16) angebracht ist.

14. Routenzug, umfassend einen oder mehrere Routenzuganhänger (1) nach einem der Ansprüche 1 bis 13 sowie ein Schleppfahrzeug (2), wobei das Schleppfahrzeug (2) über eine Datenverbindung (6) mit den Steuerungs- und Regelungsvorrichtungen der Routenzuganhänger (1) gekoppelt ist.

15. Routenzug, umfassend einen oder mehrere Routenzuganhänger (1) nach einem der Ansprüche 11 bis 13 sowie ein fahrergesteuertes Schleppfahrzeug (2), wobei das Schleppfahrzeug (2) über eine Datenverbindung (6) mit den Steuerungs- und Regelungsvorrichtungen der Routenzuganhänger (1) gekoppelt ist, und wobei das Schleppfahrzeug (2) einen Bildschirm zur Anzeige des Abstandes und des Winkels der Routenzuganhänger (1) zur Übergabestation (3) aufweist.

## Claims

1. Route train trailer (1), comprising one or more driven roller conveyors (10) aligned transversely to the longitudinal axis (5) of the vehicle, by means of which a load carrier (4) can be delivered either via one of the two vehicle sides of the route train trailer (1) to a transfer station (3) or can be accommodated by this, and a control and regulation device, **characterized in that** the route train trailer (1) comprises
- one or more data light barriers (12) for wireless data exchange with the transfer station (3), and
- one or more position distance sensors (14) for detecting the position of the load carrier (4) on the roller conveyor (10) or roller conveyors (10),
- wherein the control and regulation device is set up to control the roller rotation direction and/or the roller rotation speed of each of the roller conveyors (10) individually as a function of the position of the load carrier (4) on the roller conveyor (10) or roller conveyors (10).

2. Route train trailer (1) according to claim 1, **characterized in that** the position distance sensors (14) are distributed symmetrically on the vehicle front and on the vehicle rear side of the route train trailer (1).

3. Route train trailer (1) according to claim 1 or 2, **characterized in that** four position distance sensors (14) are attached to the route train trailer (1).

4. Route train trailer (1) according to one of claims 1 to 3, **characterized in that** the data light barriers (12) are attached to the vehicle sides of the route train trailer (1).

5. Route train trailer (1) according to claim 4, **characterized in that** three data light barriers (12) are attached to the route train trailer on each side of the vehicle.

6. Route train trailer (1) according to one of claims 1 to 5, **characterized in that** it comprises one or more one-way light barriers (13) for detecting the beginning and end of the load carrier transfer to or from the transfer station (3).

7. Route train trailer (1) according to claim 6, **characterized in that** the one-way light barriers (13) are attached to the vehicle sides of the route train trailer (1), wherein the optical path running between the one-way light barrier transmitter and the one-way light barrier receiver in each case lies above the roller conveyors (10) and parallel to the longitudinal axis (5) of the vehicle.

8. Route train trailer (1) according to one of claims 1 to 7, **characterized in that** a load securing element (11) that can be raised or lowered by means of the control and regulation device is installed at the start of each roller conveyor and at the end of each roller conveyor of each of the roller conveyors (10).

9. Route train trailer (1) according to one of claims 1 to 8, that comprises one or more reflection light barriers (15) for detecting the position in the travel direction relative to the transfer station (3).

10. Route train trailer (1) according to claim 9, **characterized in that** the reflection light barriers (15) are attached to the vehicle sides of the route train trailer (1).

11. Route train trailer (1) according to any one of claims 1 to 10, **characterized in that** it comprises one or more position distance sensors (16) for determining the distance and the angle to the transfer station (3).

12. Route train trailer (1) according to claim 11, **characterized in that** the position distance sensors (16) are arranged on the vehicle sides of the route train trailer (1).

13. Route train trailer (1) according to claim 12, **characterized in that** one of the position distance sensors (16) is attached to each vehicle side of the route train trailer (1) on each of the roller conveyors (10) in the region of the two positions of the roller bearings.

14. Route train, comprising one or more route train trailers (1) according to one of claims 1 to 13 and a towing vehicle (2), wherein the towing vehicle (2) is coupled to the control and regulation devices of the route train trailer (1) via a data connection (6).

15. Route train, comprising one or more route train trailers (1) according to one of claims 11 to 13 and a driver-controlled towing vehicle (2), wherein the towing vehicle (2) is coupled with the control and regulation devices of the route train trailer (1) via a data connection (6), and wherein the towing vehicle (2) has a screen for displaying the distance and the angle of the route train trailers (1) to the transfer station (3).

## Revendications

1. Remorque de chariot tracteur (1), comprenant un ou plusieurs convoyeurs à rouleaux (10) entraînés, orientés transversalement à l'axe longitudinal (5) du véhicule, au moyen desquels un support de charge (4) peut être délivré à un poste de transfert (3) ou être pris en charge par celui-ci, au choix par l'intermédiaire de l'un des deux côtés du véhicule de la remorque de chariot tracteur (1), ainsi qu'un dispositif de commande et de régulation, **caractérisée en ce que** la remorque de chariot tracteur (1) présente
- une ou plusieurs barrières lumineuses de données (12) pour l'échange de données sans fil avec le poste de transfert (3), et
- un ou plusieurs capteurs de distance de position (14) pour la détection de la position du support de charge (4) sur le ou les convoyeurs à rouleaux (10),
- le dispositif de commande et de régulation étant conçu pour commander individuellement le sens de rotation des rouleaux et/ou la vitesse de rotation des rouleaux de chacun des convoyeurs à rouleaux (10) en fonction de la position du support de charge (4) sur le ou les convoyeurs à rouleaux (10).

2. Remorque de chariot tracteur (1) selon la revendication 1, **caractérisée en ce que** les capteurs de distance de position (14) sont répartis de manière symétrique sur le côté avant et sur le côté arrière du véhicule de la remorque de chariot tracteur (1).

3. Remorque de chariot tracteur (1) selon la revendication 1 ou 2, **caractérisée en ce que** quatre capteurs de distance de position (14) sont montés sur la remorque de chariot tracteur (1).

4. Remorque de chariot tracteur (1) selon l'une quelconque des revendications 1 à 3, **caractérisée en ce que** les barrières lumineuses de données (12) sont montées sur les côtés du véhicule de la remorque de chariot tracteur (1).

5. Remorque de chariot tracteur (1) selon la revendication 4, **caractérisée en ce que** trois barrières lumineuses de données (12) sont montées sur la remorque de chariot tracteur de chaque côté du véhicule.

6. Remorque de chariot tracteur (1) selon l'une quelconque des revendications 1 à 5, **caractérisée en ce qu'**elle comprend une ou plusieurs barrières lumineuses unidirectionnelles (13) pour détecter le début et la fin du transfert des supports de charge vers ou depuis le poste de transfert.

7. Remorque de chariot tracteur (1) selon la revendication 6, **caractérisée en ce que** les barrières lumineuses unidirectionnelles (13) sont montées sur les côtés du véhicule de la remorque de chariot tracteur (1), le parcours de la lumière entre l'émetteur de la barrière lumineuse unidirectionnelle et le récepteur de la barrière lumineuse unidirectionnelle s'étendant respectivement au-dessus des transporteurs à rouleaux (10) parallèlement à l'axe longitudinal (5) du véhicule.

8. Remorque de chariot tracteur (1) selon l'une quelconque des revendications 1 à 7, **caractérisée en ce qu'**un élément de sécurisation de chargement (11) pouvant être soulevé ou abaissé au moyen du dispositif de commande et de régulation est installé à chaque début de convoyeur à rouleaux et à chaque fin de convoyeur à rouleaux de chacun des convoyeurs à rouleaux (10).

9. Remorque de chariot tracteur (1) selon l'une quelconque des revendications 1 à 8, **caractérisée en ce qu'**elle présente une ou plusieurs barrières lumineuses à réflexion (15) pour la détection de la position dans le sens de la marche par rapport au poste de transfert (3).

10. Remorque de chariot tracteur (1) selon la revendication 9, **caractérisée en ce que** les barrières lumineuses à réflexion (15) sont montées sur les côtés du véhicule de la remorque de chariot tracteur (1).

11. Remorque de chariot tracteur (1) selon l'une quelconque des revendications 1 à 10, **caractérisée en ce qu'**elle présente un ou plusieurs capteurs de distance de position (16) pour déterminer la distance et l'angle par rapport au poste de transfert (3).

12. Remorque de chariot tracteur (1) selon la revendication 11, **caractérisée en ce que** les capteurs de distance de position (16) sont disposés sur les côtés du véhicule de la remorque de chariot tracteur (1).

13. Remorque de chariot tracteur (1) selon la revendication 12, **caractérisée en ce qu'**un des capteurs de distance de position (16) est monté respectivement sur chaque côté du véhicule de la remorque de chariot tracteur (1), sur chacun des convoyeurs à rouleaux (10), respectivement dans la zone des deux positions des paliers à rouleaux.

14. Chariot tracteur comprenant une ou plusieurs remorques de chariot tracteur (1) selon l'une quelconque des revendications 1 à 13, ainsi qu'un véhicule de remorquage (2), le véhicule de remorquage (2) étant couplé aux dispositifs de commande et de régulation des remorques de chariot tracteur (1) par une liaison de données (6).

15. Chariot tracteur, comprenant une ou plusieurs remorques de chariot tracteur (1) selon l'une quelconque des revendications 11 à 13 ainsi qu'un véhicule de remorquage (2) commandé par le conducteur, le véhicule de remorquage (2) étant couplé aux dispositifs de commande et de régulation des remorques de chariot tracteur (1) par l'intermédiaire d'une liaison de données (6), et le véhicule de remorquage (2) présentant un écran pour l'affichage de la distance et de l'angle des remorques de chariot tracteur (1) par rapport au poste de transfert (3).
